# EUROPEAN PATENT SPECIFICATION

(11) **EP 2 636 475 B1**
(45) Date of publication and mention of the grant of the patent: **21.06.2017**
(21) Application number: 13170942.0
(22) Date of filing: 24.07.2009
(51) Int. Cl.: B23D 53/12, B23D 55/00, B23D 55/08

(54) **Band Saw**
Bandsäge
Scie À Ruban

(30) Priority: 25.07.2008 US 83715 P; 31.07.2008 US 85021 P
(43) Date of publication of application: 11.09.2013
(62) Divisional of application: 09801046.5
(73) Proprietor: MILWAUKEE ELECTRIC TOOL CORPORATION, Brookfield Wisconsin 53005 (US)
(72) Inventor: Bertsch, Matthew T., Wisconsin 53151 (US); Elger, William A., Wisconsin 53095 (US)
(74) Representative: Robinson, David Edward Ashdown

(56) References cited:
- JP-A- 2000 042 949
- US-A- 4 001 937
- US-A- 4 953 295
- US-A1- 2002 157 264
- US-A1- 2005 188 550
- US-B2- 7 287 454

## Description

### BACKGROUND OF THE INVENTION

The present invention relates to power tools, and more particularly to band saws. Such a power tool is known from US7287454, which discloses the preamble of claim 1.

Band saws are generally configured with various sizes to accommodate different cutting applications. For instance, band saws may be large and heavy, which may be difficult for a user to operate in a variety of cutting applications. Band saws may have a 12.1 centimetre (4.75-square inch) cutting capacity or as little as 6.4-square centimetre (2.5-square inch) cutting capacity. The spacing distance, or the distance between an axis of rotation of a pulley wheel and a center point of a guide roller set on a non-compact band saw is approximately 8.4 centimetres (3.3 inches). The twist rate, or the amount of twist of the band saw blade from a perpendicular position to a cutting position on a band saw is approximately 15.15 degrees per 2.5 centimetre (15.15 degrees per inch) (i.e., 50 degree twist over a distance of 8.4 centimetres (3.3 inches)).

In addition, band saws typically include a housing surrounding at least an outer circumference of the band saw blade. The housing protects a user from portions of the band saw blade located in non-cutting positions and protects the band saw blade from being disrupted and/or misaligned. The housing endures bumps and scratches caused by the user, and therefore the housing is often in need of replacement or repair. To replace the housing on a band saw, the band saw often requires disassembly because the main components of the band saw (e.g., the motor, the handle, and the gear box, for example) are coupled to the housing. Then, the main components must be reassembled onto a new housing.

US 7287454 describes a hand-held saw for one-hand operation. The band saw has a frame and a handle extending from a longitudinal edge of the frame at an acute angle and opposite an edge containing a throat for receiving the work piece.

### SUMMARY OF THE INVENTION

The invention relates to a a hand-held power tool as defined in claim 1.

Other features and aspects of the invention will become apparent by consideration of the following detailed description and accompanying drawings.

### BRIEF DESCRIPTION OF THE DRAWINGS

FIG. 1 is a front perspective view of a band saw according to one construction of the invention.
FIG. 2 is a rear perspective view of the band saw of FIG. 1.
FIG. 3 is a right-side view of the band saw of FIG. 1.
FIG. 4 is a left-side view of the band saw of FIG. 1.
FIG. 5 is a front view of the band saw of FIG. 1.
FIG. 6 is a rear view of the band saw of FIG. 1.
FIG. 7 is a top view of the band saw of FIG. 1.
FIG. 8 is a bottom view of the band saw of FIG. 1.
FIG. 9 is another left-side side view of the band saw of FIG. 1.
FIG. 10 is an exploded, perspective view of the band saw of FIG. 1.
FIG. 11 is a cross-sectional view of the band saw of FIG. 1 through line 11-11 in FIG. 9.
FIG. 12 is a front perspective view of a band saw according to a second construction of the invention.
FIG. 13 is a rear perspective view of the band saw of FIG. 12.
FIG. 14 is a right-side view of the band saw of FIG. 12.
FIG. 15 is a left-side view of the band saw of FIG. 12.
FIG. 16 is a front view of the band saw of FIG. 12.
FIG. 17 is a rear view of the band saw of FIG. 12.
FIG. 18 is a top view of the band saw of FIG. 12.
FIG. 19 is a bottom view of the band saw of FIG. 12.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

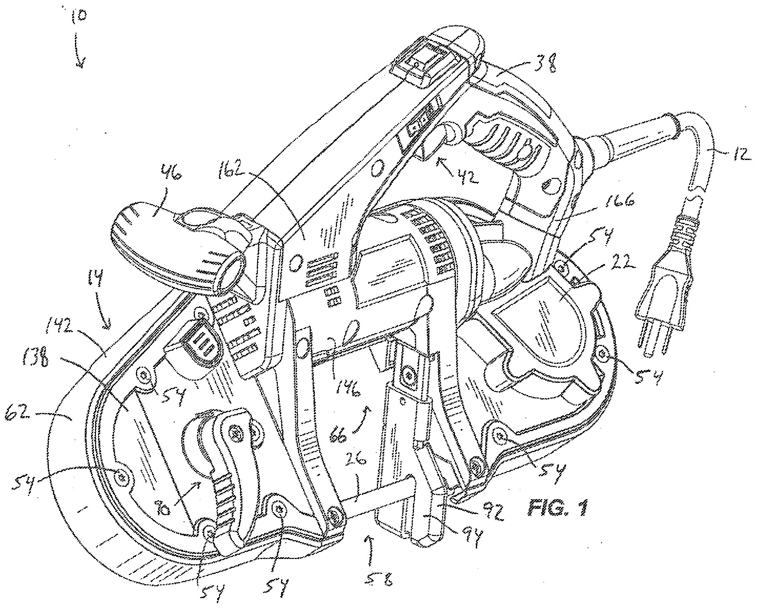

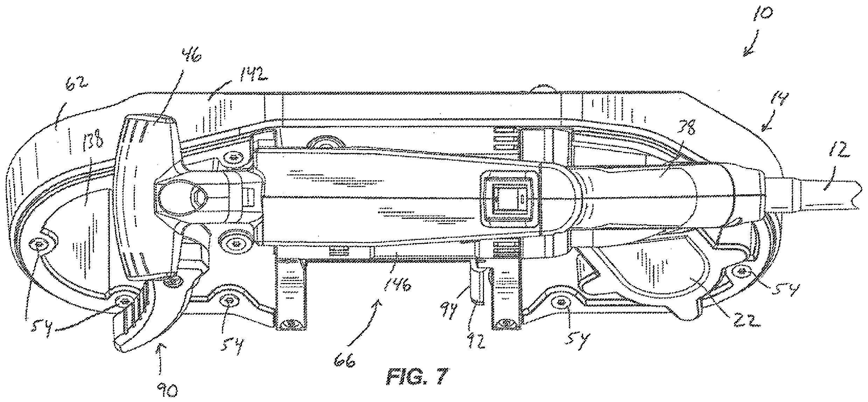

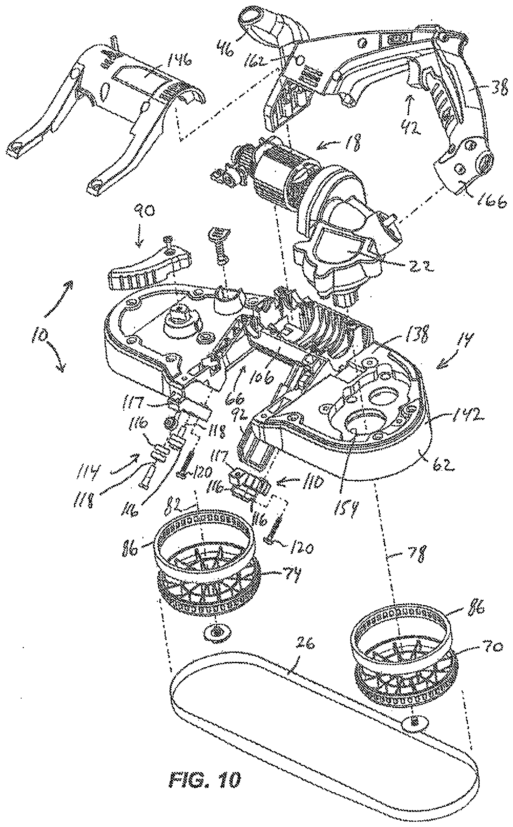

FIGS. 1-11 illustrate a band saw 10 including a frame or housing 14 supporting a motor 18 and a gear box 22. In the illustrated construction of the band saw 10, the motor 18 (FIG. 10) is configured as an AC motor, and the band saw 10 includes an electrical connection cord 12 connectable to a source of AC power (e.g., a household electrical outlet) to deliver AC power to the motor 18. The motor 18 is drivingly connected to a drive assembly (not shown) at least partially housed within the gear box 22. The drive assembly may include any of a number of different gear train arrangements configured to provide a low-speed, high-torque output from the high-speed, low-torque input provided by the motor 18. The motor 18 and the drive assembly are operable to drive a continuous band saw blade 26 to cut a work piece.

With reference to FIGS. 1-3, the housing 14 includes a main handle 38 supporting a switch assembly 42 to provide power to the band saw 10. The switch assembly 42 is operable to control operation of the motor 18. The band saw 10 also includes an auxiliary handle 46 for a user's other hand. Generally, the handles 38, 46 are shaped and arranged for two-handed operation of the band saw 10 as the work piece is cut. In the illustrated construction of the band saw 10, each handle 38, 46 has an ergonomic design to provide comfortable gripping and controlled operation of the band saw 10. The ergonomic design of each handle 38, 46 may include the orientation or angle of one or more of the handles 38, 46. The ergonomic design may also include the use of material, such as an elastomeric material, on one or more of the handles 38, 46 to provide an improved grip surface, isolate vibration and impacts from the operator, prevent heat build-up and/or heat transfer to the operator, etc.

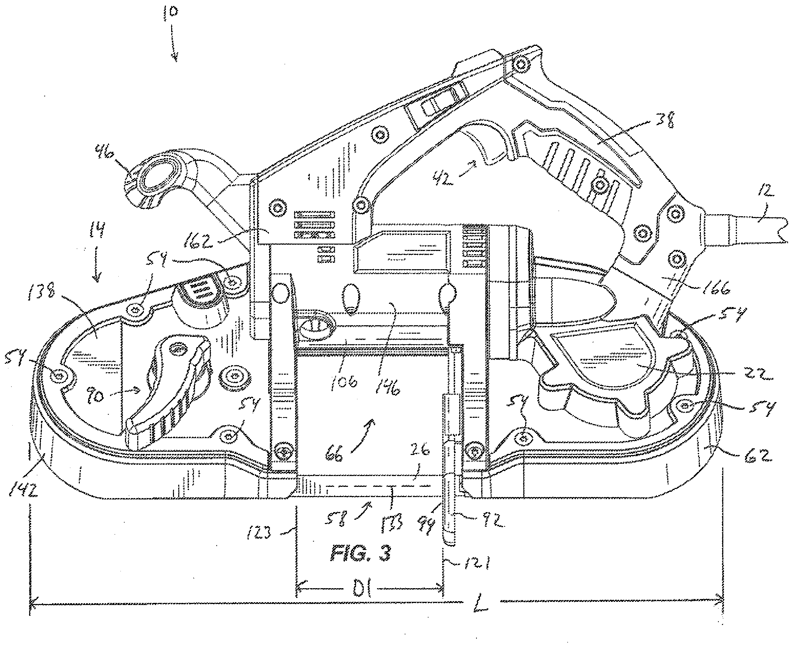

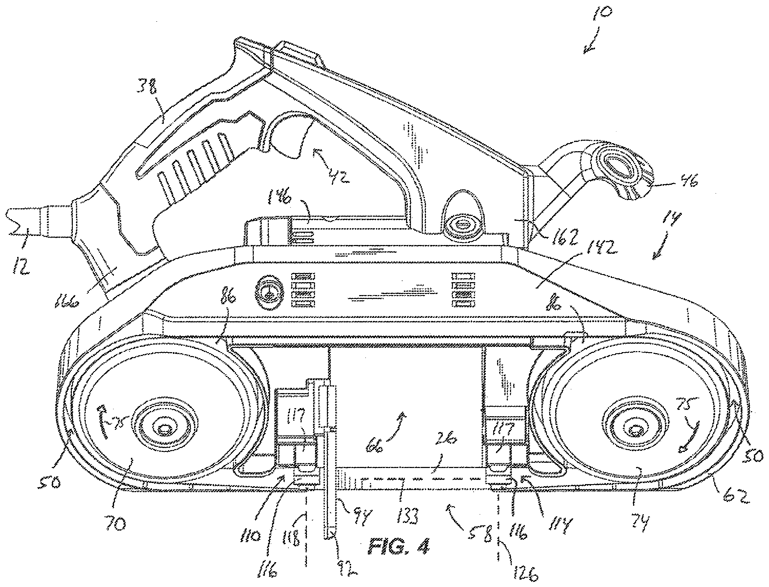

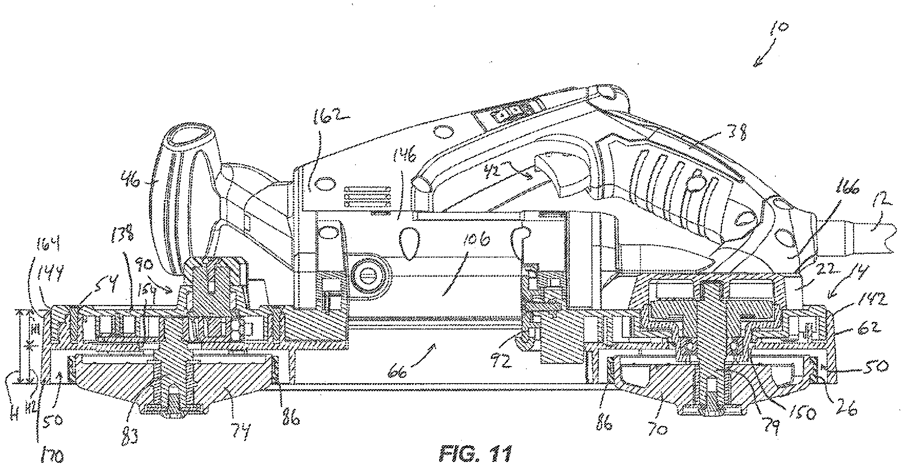

With reference to FIGS. 10 and 11, the housing 14 of the band saw 10 includes a deck 138 and a guard 142 coupled to the deck 138. A combination of the deck 138 and the guard 142 defines an opening or U-shaped cavity 66. The guard 142 includes a blade guard portion 62 that provides a recessed area 50 in which the band saw blade 26 is positioned (FIG. 4). In the illustrated construction of the band saw 10, the guard 142 is formed as a separate piece from the deck 138 and is removably coupled to the deck 138 (e.g, using fasteners 54). The guard 142 is made of a hard plastic or polymer material and is positioned around a perimeter 144 of the deck 138 to protect the perimeter 144 of the deck 138 from bumps and scratches that occur during use. In some constructions of the band saw 10, a coating or other layer of material may be positioned over all or a portion of the deck 138 and the guard 142 to cover at least a portion of the deck 138 and guard 142. The guard 142 substantially covers the band saw blade 26 when the blade 26 is in a non-cutting position (i.e., when the blade 26 is outside of a cut zone 58; FIG. 3), while the band saw blade 26 is fully exposed and unobstructed by the guard 142 within the cut zone 58.

With reference to FIG. 10, the deck 138 includes a motor support portion 106 and a separate motor cover 146 that together enclose the motor 18. In the illustrated construction of the band saw 10, the motor support portion 106 is adjacent the cavity 66 and defines an upper boundary of the cavity 66. Alternatively, the motor support portion 106 may be located remotely from the cavity 66. With reference to FIGS. 3 and 10, the main handle 38 includes a first end 162 coupled to the motor support portion 106 of the housing 14 at a location nearer the front of the cavity 66 than the rear of the cavity 66. The main handle 38 also includes a second end 166 coupled to the housing 14 at a location nearer the rear of the cavity 66 than the front of the cavity 66. The gear box 22 and the motor 18 are coupled to the deck 138. The gear box 22 is mechanically sealed to prevent dust and debris from entering the gear box 22.

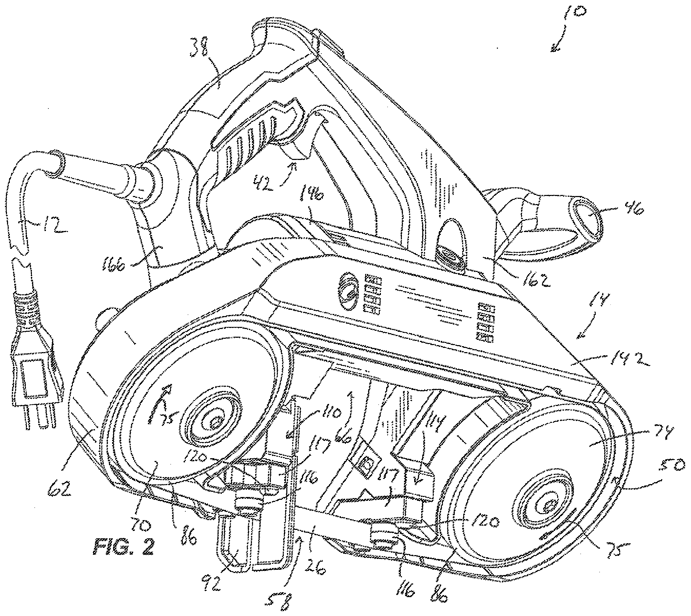

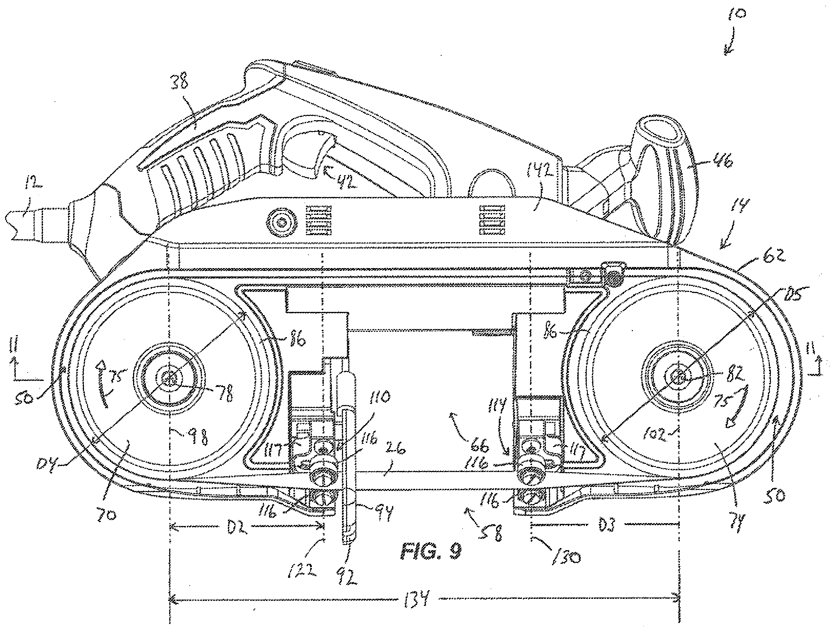

With reference to FIG. 2, the band saw 10 includes a drive wheel 70 and a driven wheel 74. The outer peripheral surface and an interiorside of each of the drive wheel 70 and the driven wheel 74 are covered by the deck 138 and the guard 142 (FIG. 11). The drive wheel 70 rotates about a drive wheel axis 78 (FIG. 9) defined by a drive wheel axle 79 (FIG. 11) and is drivingly connected to the motor 18 via the drive assembly in the gear box 22. The driven wheel 74 rotates about a driven wheel axis 82 (FIG. 9) defined by a driven wheel axle 83 (FIG. 11) and is rotatably supported by the deck 138. The guard 142 includes a first aperture 150 for receiving the drive wheel axle 76 and a second aperture 154 for receiving the driven wheel axle 83.

A tire 86 is coupled to the periphery of each of the drive wheel 70 and the driven wheel 74 (FIG. 10). Each of the tires 86 is a circular-shaped ring formed of a soft and/or flexible elastomeric material that is able to lock or adhere to the drive wheel 70 or the driven wheel 74. The band saw blade 26 extends around the drive wheel 70 and the driven wheel 74 and grips the tires 86 and, as a result, motion from the drive wheel 70 is transmitted to the band saw blade 26 via the wheel tires 86. With reference to FIGS. 1, 3, and 10, the band saw 10 also includes a blade tensioning mechanism 90 coupled to the deck 138 to adjustably provide appropriate tension on the band saw blade 26. Specifically, the blade tensioning mechanism 90 is operable to move the driven wheel axle 83 right-to-left from the point of view of FIG. 11, within the aperture 154 in the guard 142, to increase the tension in the band saw blade 26. The band saw 10 also includes a shoe 92 having a support surface 94 against which a work piece is abutted during a cutting operation (FIG. 1).

With reference to FIG. 11, an outer portion of the guard 142 is generally T-shaped and includes first and second flanges or extensions 164, 170. The first extension 164 substantially covers the perimeter 144 of the deck 138 to protect the deck 138 from scratches, dents, and cracks. The second extension 170 extends downwardly from the first extension 164 and is positioned proximate the drive and driven wheels 70, 74 and the band saw blade 26. The second extension 170 protects the band saw blade 26 from damage caused by external objects and from being disrupted or misaligned from its position on the tires 86. The guard 142 includes a height H divided into a first height H1 corresponding to the first extension 164 and a second height H2 corresponding to the second extension 170. In the illustrated construction of the band saw 10, the first and second heights H1, H2 are substantially equal. Alternatively, the first and second heights H1, H2 of the guard 142 may be different.

In the event that the guard 142 needs to be repaired or replaced, the drive wheel 70 and the driven wheel 74 are detached from the drive wheel axle 79 and the driven wheel axle 83, respectively, and the guard 142 is uncoupled from the deck 138 by removing the fasteners 54 from the deck 138. Because the gear box 22, the motor 18, and the main handle 38 are coupled to the deck 138 and not the guard 142, these components need not be disassembled in order to replace the guard 142.

The guard 142 adds strength and structural stability to the band saw 10. The tension of the band saw blade 26 tends to force the drive wheel 70 and the driven wheel 74 together inwardly toward the cavity 66. Together, the arrangement of the deck 138 and the guard 142 provide a sturdy housing 14 that stabilizes the band saw blade 26 and prevents the wheels 70, 74 from collapsing inward toward the cavity 66.

With reference to FIG. 9, the drive wheel axis 78 is contained within a drive wheel plane 98, and the driven wheel axis 82 is contained within a driven wheel plane 102 that is in facing relationship with and substantially parallel to the drive wheel plane 98. The saw blade 26 intersects each of the planes 98, 102 and is oriented substantially perpendicular to each of the planes 98, 102 between the respective planes 98,102.

With reference to FIGS. 2, 9, and 10, the band saw 10 indudes a first guide roller set 110 disposed on one side of the cavity 66 and a second guide roller set 114 disposed on an opposite side of the cavity 66. Each of the guide roller sets 110, 114 includes aligned rollers 116 with which opposite sides of the saw blade 26 are engaged and a mounting block 117 to which the rollers 116 are rotatably supported. With reference to FIG. 10, the mounting blocks 117 are coupled to the deck 138 (e.g., using fasteners 120). The first and second guide roller sets 110, 114 support the band saw blade 26 as the blade 26 enters and exits the cut zone 58. The cut zone 58 includes a distanceD1 between a plane 121 defined by the support surface 94 of the shoe 92 and a plane 123 oriented parallel and aligned with the portion of the housing 14 defining the front edge of the cavity 66 (FIG. 3).

With reference to FIG. 4, each of the rollers 116 of the first guide roller set 110 defines a rotational axis 118 (FIG. 4). A first guide roller plane 122 contains the roller axes 118 and is oriented substantially parallel with the drive wheel plane 98 (FIG. 9). The distance between the drive wheel plane 98 and the first guide roller plane 122 defines a spacing distance D2. In the illustrated construction of the band saw 10, the spacing distance D2 is approximately 6.6 centimetres (2.6 inches). In other constructions of the band saw 10, the spacing distance D2 may be greater than 6.6 centimetres (2.6 inches), but less than 8.4 centimetres (3.3 inches). In still other constructions of the band saw 10, the spacing distance D2 may be less than 6.6 centimetres (2.6 inches).

With reference to FIG. 4, each of the rollers 116 of the second guide roller set 114 defines a rotational axis 126. A second guide roller plane 130 contains the roller axes 126 and is oriented substantially parallel with the driven wheel plane 102 (FIG. 9). The distance between the driven wheel plane 102 and the second guide roller plane 130 defines a spacing distance D3. In the illustrated construction of the band saw 10, the spacing distance D3 is approximately 6.6 centimetres (2.6 inches). In other constructions of the band saw 10, the spacing distance D3 may be greater than 6.6 centimetres (2.6 inches), but less than 8.4 centimetres (3.3 inches). In still other constructions of the band saw 10, the spacing distance D3 may be less than 6.6 centimetres (2.6 inches).

In the illustrated construction of the band saw 10, the drive wheel 70 includes a diameter D4 of about 10.2 centimetres (4 inches) (FIG. 9). Therefore, a ratio of the distance D2 to the diameter D4 is between about 0.65 and about 0.825. Further, in the illustrated construction of the band saw 10, the driven wheel 74 includes a diameter D5 substantially similar to the diameter D4 of the drive wheel 70, such that a ratio of the distance D3 to the diameter D5 is also between about 0.65 and about 0.825. Alternatively, the diameters D4, D5 of the respective wheels 70, 74 may be less than about 10.2 centimetres (4 inches). As a further alternative, the diameters D4, D5 of the respective wheels 70, 74 may be different.

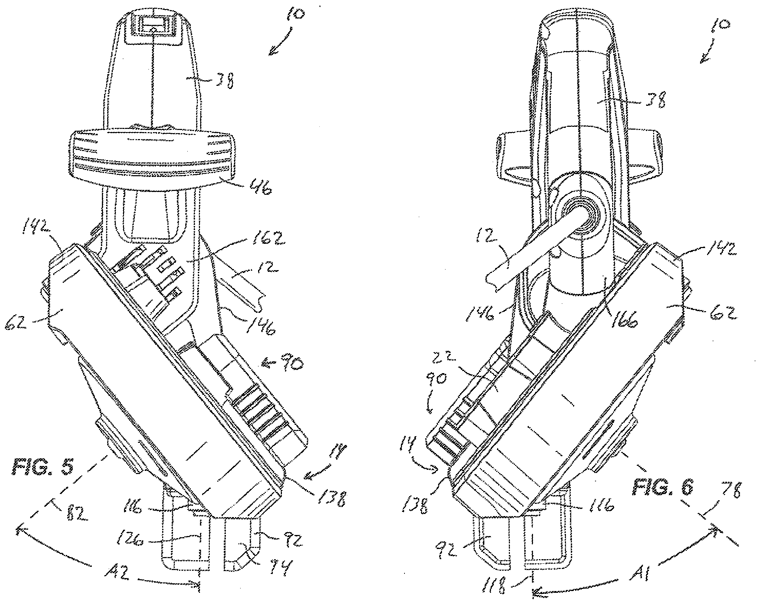

With reference to FIG. 6, the roller axes 118 are oriented at an oblique included angle A1 relative to the drive wheel axis 78, such that the blade 26 is twisted by an amount equal to angle A1 when moving from the first guide roller set 110 to the drive wheel 70 about a longitudinal axis 133 of the blade 26 (FIG. 3). Likewise, with reference to FIG. 5, the roller axes 126 are oriented at an oblique included angle A2 relative to the driven wheel axis 82, such that the saw blade 26 is twisted by an amount equal to angle A2 about its longitudinal axis 133 when moving from the driven wheel 74 to the second guide roller set 114. In the illustrated construction of the band saw 10, the twist angles A1, A2 are equal to about 50 degrees. Alternatively, the roller axes 118, 126 of the first and second guide roller sets 110, 114 may be oriented to provide twist angles A1, A2 that are greater than or less than 50 degrees.

The blade 26 twists prior to entering the cut zone 58 and subsequent to exiting the cut zone 58 at a rate equal to the total value of blade twist (i.e., twist angles A1, A2) divided by the spacing distance D2, D3. In the illustrated construction of the band saw 10, the twist rate of the saw blade 26 is approximately 19.23 degrees per 2.5 centimetre (19.23 degrees per inch) (i.e., the saw blade 26 twists 50 degrees over the 6.6 centimetres (2.6-inch) spacing distance D2, D3). In other words, the blade 26 twists at a rate of about 19.23 degrees per 2.5 centimetre (19.23 degrees per inch) between the driven wheel 74 and the second guide roller set 114, and between the first guide roller set 110 and the drive wheel 70 (i.e., when the distances D2, D3 are each equal to about 6.6 centimetres (2.6 inches)). Alternatively, for distances D2, D3 greater than about 6.6 centimetres (2.6 inches) but less than about 8.4 centimetres (3.3 inches), respectively, the blade 26 would twist at a rate of less than about 19.23 degrees per 2.5 centimetre (19.23 degrees per inch), but greater than about 15.15 degrees per 2.5 centimetre (15.15 degrees per inch) between the driven wheel 74 and the second guide roller set 114, and between the first guide roller set 110 and the drive wheel 70.

In operation of the band saw 10, the motor 18 and drive assembly rotate the drive wheel 70 in a clockwise direction (indicated by arrow 75) from the point of view of FIG. 9. Therefore, the saw blade 26 and the driven wheel 74 are also rotated in a clockwise direction (indicated by arrow 75). Prior to crossing the driven wheel plane 102, the saw blade 26 lies flat against the outer peripheral surface of the tire 86 on the driven wheel 74. However, after crossing the driven wheel plane 102, the rotating saw blade 26 enters a twist zone 134 between the driven wheel and drive wheel planes 102, 98. As the blade 26 enters the twist zone 134, the blade 26 begins to twist about its longitudinal axis 133 and approaches the twist angle A2 with respect to the driven wheel axis 82 (e.g., 50 degrees in the illustrated construction of the band saw 10), until the blade 26 enters the second roller guide set 114 where the blade 26 has reached the 50-degree twist angle A2. The blade 26 remains at the 50-degree twist angle A2 as the blade 26 travels through the cut zone 58. The blade 26 remains twisted at the 50-degree twist angle A2 until the blade 26 crosses the first roller guide plane 122. Between the first roller guide plane 122 and the drive wheel plane 98, the blade 26 "un-twists" an amount equal to the twist angle A1 (e.g., 50 degrees in the illustrated construction of the band saw 10). After the blade 26 crosses the drive wheel plane 98 and exits the twist zone 134, the blade 26 is returned to an orientation in which the blade 26 lies flat against the outer peripheral surface of the tire 86 on the drive wheel 70.

By reducing the spacing (i.e., distance D2) between the first guide roller set 110 and the drive wheel 70, and by reducing the spacing (i.e., distance D3) between the second guide roller set 114 and the driven wheel 74, the band saw 10 is more compact than non-compact and existing band saws. Particularly, decreasing the diameterD4 of the drive wheel 70 in combination with decreasing the spacing distance D2, and decreasing the diameter D5 of the driven wheel 74 in combination with decreasing the spacing distance D3, makes the band saw 10 more compact than other band saws. In the illustrated construction of the band saw 10, the length or distance D1 of the cut zone 58 and a cutting capacity of 8.3-square centimetres (3.25- square inches) (i.e., at least 8.3 centimetres (3.25 inches) in length by 8.3 centimetres (3.25 inches) in height) within the cavity 66 is maintained regardless of the values of the spacing distances D2, D3. The spacing distances D2, D3 may be reduced by eliminating any additional non-essential material within the housing 14, as well as by providing smaller drive and driven wheels 70, 74 as compared to other band saws.

In the compact band saw 10, the decreased spacing distances D2, D3 shorten the length L of the band saw 10 (FIG. 3), such that band saw 10 is approximately 41 centimetres (sixteen inches) in length. In other constructions, the band saw 10 may be greater than 41 centimetres (sixteen inches), but less than 51 centimetres (twenty inches) in length. In still other constructions, the band saw 10 may be less than 41 centimetres (sixteen inches) in length. Furthermore, the compact band saw 10 size minimizes the size and weight of the band saw 10, such that the band saw 10 may be used for overhead and out-of-position applications which would otherwise be more difficult when using a existing and non-compact band saws. The compact band saw 10 weighs about 4.1 kilograms (nine pounds). However, in other constructions, the band saw 10 may weigh more than 4.1 kilograms (nine pounds), but less than 7.3 kilograms (sixteen pounds). In still other constructions, the band saw 10 may weigh less than 4.1 kilograms (nine pounds). The compact band saw 10 has as much or more power than a non-compact band saw.

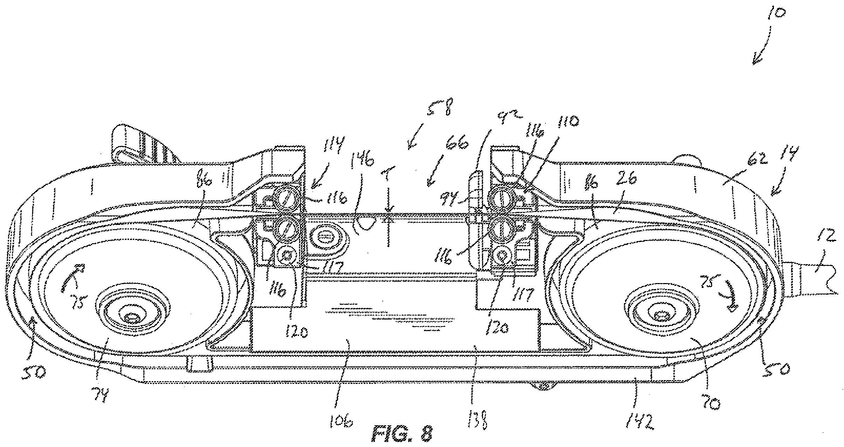

The reduced spacing distances D2, D3 on the compact band saw 10 also enable an increased twist rate of the saw blade 26 as compared to the twist rate of a con-compact or existing band saw blade. With reference to FIG. 8, the saw blade 26 has a thickness T which, in some constructions of the band saw 10, may be decreased to allow the twist rate of the saw blade 26 to be increased while maintaining a similar blade fatigue life as compared to a saw blade having an existing, larger thickness. Decreasing the thickness T of the saw blade 26 may also reduce the shear stress experienced by the band saw blade 26 as it is twisted in the twist zone 134.

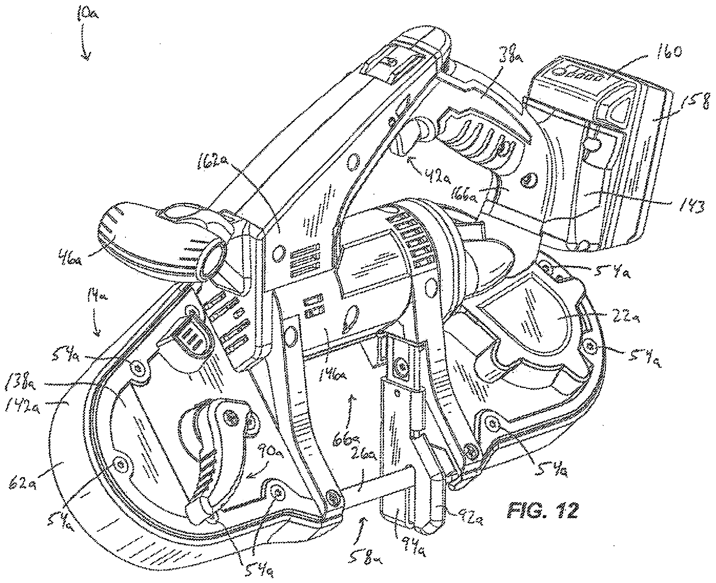

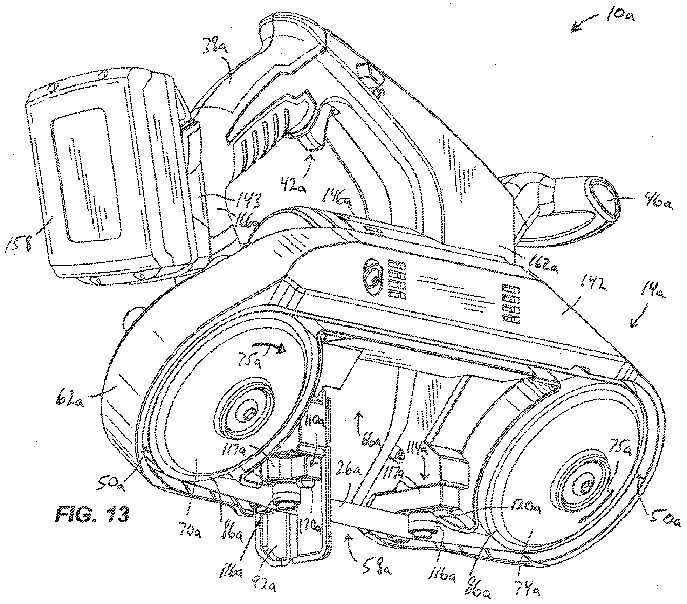

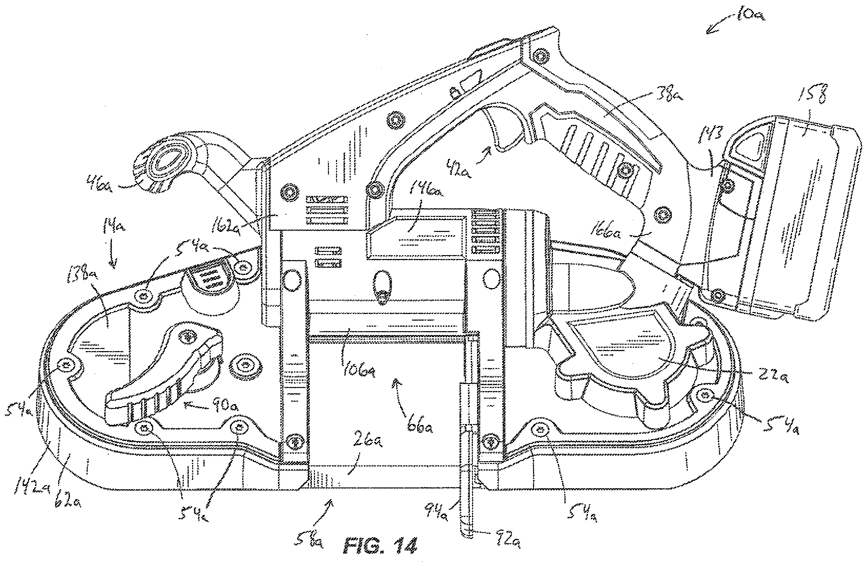

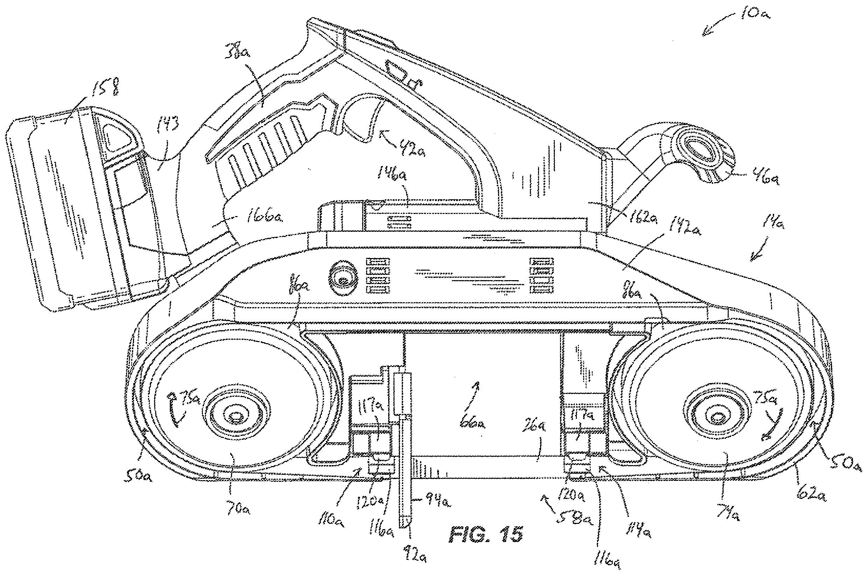

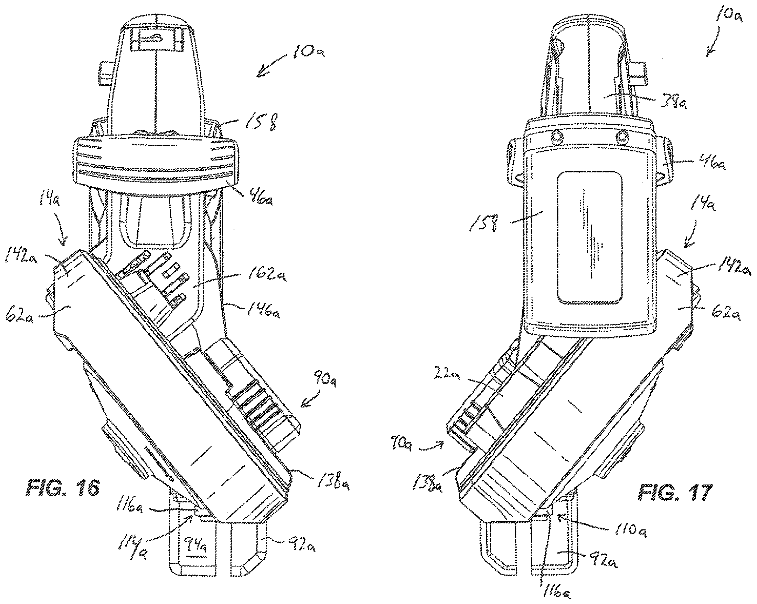

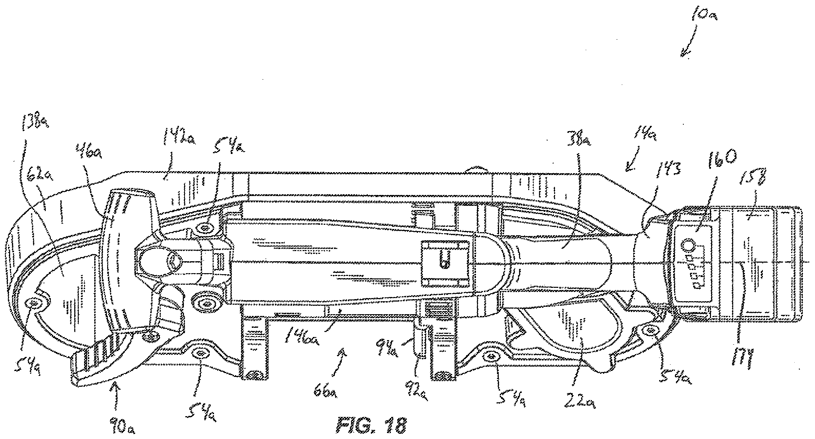

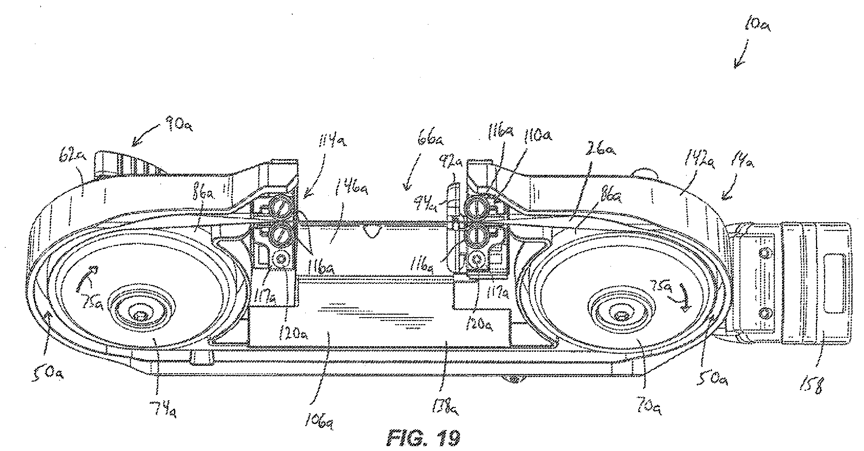

FIGS. 12-19 illustrate a second construction of a band saw 10a, with like components being labeled with like reference numerals including the letter "a." The band saw 10a is substantially similar to the band saw 10 of FIGS. 1-11. However, the band saw 10a includes a removable, rechargeable battery 158 for supplying power to the band saw 10a. In the illustrated construction of the band saw 10a, the battery 158 is an 18-volt power tool battery 158 coupled to the main handle 38a. Specifically, the battery 158 is coupled to the second end 166a of the main handle 38a, which includes a battery support portion 143 for physically supporting the battery 158 on the housing 14a. The battery support portion 143 also includes a terminal assembly (not shown) for electrically connecting the battery 158 to the band saw motor via an electrical circuit (not shown). The battery 158 and the main handle 38a are aligned with or bisected by a common plane 174 (FIG. 18). As a result, the position of the battery 158 with respect to the housing 14a facilitates a substantially clear line of sight with the band saw blade 26a and the work piece during operation of the band saw 10a. In addition, by aligning the battery 158 and the main handle 38a such that the battery 158 and the main handle 38a are bisected with a common plane 174, the overall balance of the compact band saw 10a is increased, the ease of removal and/or replacement of the battery 158 is simplified, and the visibility of the battery 158 (and battery fuel gauge 160, if provided) is enhanced.

The battery 158 includes five (5) Lithium-ion battery cells and is coupled to the main handle 38a by sliding contact with the main handle 38a. Alternatively, the battery 158 may be coupled to the main handle 38a by insertion, snapping, rotating, or the like. In other constructions of the band saw 10a, the battery 158 may include fewer or more battery cells such that the battery 158 has a lower nominal voltage (e.g., 12 volt, 14.4 volt, etc.) or a higher nominal voltage (e.g., 24 volt, 26 volt, 28 volt, 40 volt, etc.). Additionally or alternatively, the battery cells may have chemistries other than Lithium-ion such as, for example, Nickel Cadmium, Nickel Metal-Hydride, or the like.

## Claims

1. A hand-held power tool (10) comprising:
a housing (14) including a cavity (66);
a first wheel (70) supported by the housing (14) for rotation, the first wheel (70) located on a first side of the cavity (66);
a second wheel (74) supported by the housing (14) for rotation, the second wheel (74) located on a second side of the cavity (66) opposite the first side, wherein the first and second wheels (70, 74) are configured to support a continuous saw blade (26); and
a motor (18) positioned in the housing (14) and operably coupled to the first wheel (70);
wherein the housing (14) includes:
a deck (138) supporting the motor (18), the deck (138) having an outer perimeter (144), and
**characterised in that** a guard (142) is removably coupled to the deck (138), wherein the guard (142) includes a first portion disposed between the first wheel (70) and the deck (138), a second portion extending from the first portion transverse to the first portion and disposed adjacent the outer perimeter (144) of the deck (138), and a third portion extending from the first portion transverse to the first portion and disposed adjacent at least one of the first wheel (70) and the second wheel (74).

2. The hand-held power tool of claim 1, wherein the first and second wheels (70, 74) are configured to support the continuous saw blade (26) substantially in a plane, wherein the first portion extends substantially parallel to the plane.

3. The hand-held power tool of claim 2, wherein the second portion extends substantially perpendicular to the plane.

4. The hand-held power tool of claim 3, wherein the third portion extends substantially perpendicular to the plane, such that the first, second and third portions define a T-shape as viewed in a cross section through the guard (142) taken substantially perpendicular to the plane.

5. The hand-held power tool of claim 1, wherein a wheel cavity is defined between the first portion and the third portion for receiving at least one of the first wheel (70) and the second wheel (74).

6. The hand-held power tool of claim 1, wherein the deck (138) includes a motor support portion (106) defining an upper boundary of the cavity (66).

7. The hand-held power tool of claim 1, further comprising a gear box (22) coupled to the deck (138).

8. The hand-held power tool of claim 1, further comprising a drive wheel axle (76) coupled to the first wheel (70) and a driven wheel axle (83) coupled to the second wheel (74), wherein the guard (142) further includes a first aperture (150) for receiving the drive wheel axle (76) and a second aperture (154) for receiving the driven wheel axle (83).

9. The hand-held power tool of claim 1, wherein a height of the second portion and a height of the third portion are substantially equal.

10. The hand-held power tool of claim 1, further comprising a first tire (86) coupled to the drive wheel (70) having a first surface configured to support the continuous saw blade (26), and a second tire (86) coupled to the driven wheel (74) having a second surface configured to support the continuous saw blade (26), wherein the third portion is disposed adjacent at least one of the first and second surfaces and covers the at least one of the first and second surfaces.

11. The hand-held power tool of claim 1, wherein the deck (138) includes a top and a bottom opposite the top, wherein the motor (18) is coupled to the top of the deck (138) and wherein the guard (142) is coupled to the bottom of the deck (138).

12. The hand-held power tool of claim 1, wherein the guard (142) is removable from the deck (138) without removing the motor (18) from the deck (138).

13. The hand-held power tool of claim 1 further comprising:
a handle (38) supported by the housing (14);
wherein the first wheel (70) includes a first tire (86) having a first surface configured to support a continuous saw blade (26);
wherein the second wheel (74) includes a second tire (86) having a second surface configured to support the continuous saw blade (26), wherein the first and second tires (86) are configured to support the continuous saw blade (26) substantially in a plane;
wherein the motor (18) is operably coupled to the first wheel (70) by way of a gear box (22);
wherein the deck (138) further comprises a top and a bottom opposite the top, wherein the motor (18), the gear box (22) and the handle are coupled to the top of the deck (138); and
wherein the first portion of the guard (142) extends substantially parallel to the plane and is disposed between the first wheel (70) and the bottom of the deck (138), the second portion extends from the first portion transverse to the plane, and the third portion extends from the first portion transverse to the plane and disposed adjacent at least one of the first and second surfaces and covering the at least one of the first and second surfaces.

14. The hand-held power tool of claim 13, wherein the guard (142) is coupled to the bottom of the deck (138).

15. The hand-held power tool of claim 14, wherein the guard (142) is removable from the deck (138) without removing the motor (18) from the deck (138).

## Patentansprüche

1. Elektrohandwerkzeug (10), aufweisend:
ein Gehäuse (14) umfassend einen Hohlraum (66),
ein vom Gehäuse (14) zur Rotation getragenes erstes Rad (70), wobei das erste Rad (70) sich an einer ersten Seite des Hohlraums (66) befindet,
ein vom Gehäuse (14) zur Rotation getragenes zweites Rad (74), wobei das zweite Rad (74) sich an einer der ersten Seite gegenüberliegenden zweiten Seite des Hohlraums (66) befindet, wobei das erste und das zweite Rad (70, 74) konfiguriert sind, um ein Endlossägeblatt (26) zu tragen, und
einen im Gehäuse (14) positionierten und mit dem ersten Rad (70) betreibbar verbundenen Motor (18),
wobei das Gehäuse (14) Folgendes umfasst:
eine den Motor (18) tragende Abdeckung (138), wobei die Abdeckung (138) einen Außenumfang (144) hat, und
**dadurch gekennzeichnet, dass** eine Schutzeinrichtung (142) entfernbar mit der Abdeckung (138) verbunden ist, wobei die Schutzeinrichtung (142) einen ersten zwischen dem ersten Rad (70) und der Abdeckung (138) angeordneten Abschnitt, einen zweiten, vom ersten Abschnitt transversal zum ersten Abschnitt verlaufenden und dem Außenumfang (144) der Abdeckung (138) benachbart angeordneten Abschnitt und einen dritten, vom ersten Abschnitt transversal zum ersten Abschnitt verlaufenden und mindestens einem des ersten Rades (70) und des zweiten Rades (74) benachbart angeordneten Abschnitt umfasst.

2. Elektrohandwerkzeug nach Anspruch 1, wobei das erste und das zweite Rad (70, 74) konfiguriert sind, um das Endlossägeblatt (26) im Wesentlichen in einer Ebene zu tragen, wobei der erste Abschnitt sich im Wesentlichen parallel zur Ebene erstreckt.

3. Elektrohandwerkzeug nach Anspruch 2, wobei der zweite Abschnitt sich im Wesentlichen senkrecht zur Ebene erstreckt.

4. Elektrohandwerkzeug nach Anspruch 3, wobei der dritte Abschnitt sich im Wesentlichen senkrecht zu Ebene erstreckt, so dass der erste, zweite und dritte Abschnitt eine T-Form, gesehen in einem Querschnitt durch die Schutzeinrichtung (142) im Wesentlich senkrecht zur Ebene, definieren.

5. Elektrohandwerkzeug nach Anspruch 1, wobei zwischen dem ersten Abschnitt und dem dritten Abschnitt ein Radhohlraum zur Aufnahme von mindestens einem des ersten Rades (70) und des zweiten Rades (74) definiert ist.

6. Elektrohandwerkzeug nach Anspruch 1, wobei die Abdeckung (138) einen eine obere Begrenzung des Hohlraums (66) definierenden Motortrageabschnitt (106) umfasst.

7. Elektrohandwerkzeug nach Anspruch 1, ferner aufweisend ein mit der Abdeckung (138) verbundenes Getriebe (22).

8. Elektrohandwerkzeug nach Anspruch 1, ferner aufweisend eine mit dem ersten Rad (70) verbundene Antriebsradachse (76) und eine mit dem zweiten Rad (74) verbundene Abtriebsradachse (83), wobei die Schutzeinrichtung (142) ferner eine erste Öffnung (150) zur Aufnahme der Antriebsradachse (76) und eine zweite Öffnung (154) zur Aufnahme der Abtriebsradachse (83) umfasst.

9. Elektrohandwerkzeug nach Anspruch 1, wobei eine Höhe des zweiten Abschnitts und eine Höhe des dritten Abschnitts im Wesentlichen gleich sind.

10. Elektrohandwerkzeug nach Anspruch 1, ferner aufweisend einen mit dem Antriebsrad (70) verbundenen ersten Reifen (86) mit einer ersten Oberfläche, die konfiguriert ist, um das Endlossägeblatt (26) zu tragen, und einen mit dem Abtriebsrad (74) verbundenen zweiten Reifen (86) mit einer zweiten Oberfläche, die konfiguriert ist, um das Endlossägeblatt (26) zu tragen, wobei der dritte Abschnitt mindestens einer der ersten und der zweiten Oberfläche benachbart angeordnet ist und die mindestens eine der ersten und der zweiten Oberfläche abdeckt.

11. Elektrohandwerkzeug nach Anspruch 1, wobei die Abdeckung (138) eine Oberseite und eine der Oberseite gegenüberliegende Unterseite umfasst, wobei der Motor (18) mit der Oberseite der Abdeckung (138) verbunden ist und wobei die Schutzeinrichtung (142) mit der Unterseite der Abdeckung (138) verbunden ist.

12. Elektrohandwerkzeug nach Anspruch 1, wobei die Schutzeinrichtung (142) von der Abdeckung (138), ohne den Motor (18) von der Abdeckung (138) zu entfernen, entfernbar ist.

13. Elektrohandwerkzeug nach Anspruch 1, ferner umfassend:
einen durch das Gehäuse (14) getragenen Griff (38),
wobei das erste Rad (70) einen ersten Reifen (86) umfasst, der eine erste, zum Tragen eines Endlossägeblattes (26) konfigurierte Oberfläche hat,
wobei das zweite Rad (74) einen zweiten Reifen (86) umfasst, der eine zweite, zum Tragen des Endlossägeblattes (26) konfigurierte Oberfläche hat, wobei der erste und der zweite Reifen (86) konfiguriert sind, um das Endlossägeblatt (26) im Wesentlichen in einer Ebene zu tragen,
wobei der Motor (18) betreibbar mit dem ersten Rad (70) über ein Getriebe (22) verbunden ist,
wobei die Abdeckung (138) ferner eine Oberseite und eine der Oberseite gegenüberliegende Unterseite umfasst, wobei der Motor (18), das Getriebe (22) und der Griff mit der Oberseite der Abdeckung (138) verbunden sind und
wobei der erste Abschnitt der Schutzeinrichtung (142) sich im Wesentlichen parallel zur Ebene erstreckt und zwischen dem ersten Rad (70) und der Unterseite der Abdeckung (138) angeordnet ist, der zweite Abschnitt vom ersten Abschnitt transversal zur Ebene verläuft und der dritte Abschnitt vom ersten Abschnitt transversal zur Ebene verläuft und mindestens einer der ersten und der zweiten Oberfläche benachbart angeordnet ist und die mindestens eine der ersten und zweiten Oberfläche abdeckt.

14. Elektrohandwerkzeug nach Anspruch 13, wobei die Schutzeinrichtung (142) mit der Unterseite der Abdeckung (138) verbunden ist.

15. Elektrohandwerkzeug nach Anspruch 14, wobei die Schutzeinrichtung (142) von der Abdeckung (138), ohne den Motor (18) von der Abdeckung (138) zu entfernen, entfernbar ist.

## Revendications

1. Outil électroportatif (10) comprenant :
un boîtier (14) comportant une cavité (66),
une première roue (70) supportée rotative par le boîtier (14), la première roue (70) étant située sur un premier côté de la cavité (66),
une seconde roue (74) supportée rotative par le boîtier (14), la seconde roue (74) étant située sur un second côté de la cavité (66) opposée au premier côté, les première et seconde roues (70, 74) étant configurées pour supporter une lame de scie continue (26), et
un moteur (18) placé dans le boîtier (14) et couplé de manière fonctionnelle à la première roue (70) ;
dans lequel le boîtier (14) comporte :
un couvercle (138) supportant le moteur (18), le couvercle (138) présentant un périmètre extérieur (144) ; et
**caractérisé en ce qu'**un carter de protection (142) est couplé de manière amovible au couvercle (138), le carter de protection (142) comportant une première partie disposée entre la première roue (70) et le couvercle (138), une deuxième partie s'étendant à partir de la première partie transversalement à la première partie et disposée adjacente au périmètre extérieur (144) du couvercle (138), et une troisième partie s'étendant à partir de la première partie transversalement à la première partie et disposée adjacente à au moins une parmi la première roue (70) et la seconde roue (74).

2. Outil électroportatif selon la revendication 1, dans lequel les première et seconde roues (70, 74) sont configurées pour supporter la lame de scie continue (26) sensiblement dans un plan, la première partie s'étendant de manière sensiblement parallèle au plan.

3. Outil électroportatif selon la revendication 2, dans lequel la deuxième partie s'étend de manière sensiblement perpendiculaire au plan.

4. Outil électroportatif selon la revendication 3, dans lequel la troisième partie s'étend de manière sensiblement perpendiculaire au plan, si bien que les première, deuxième et troisième parties définissent une forme en T, vues en section transversale à travers le carter de protection (142) de manière sensiblement perpendiculaire au plan.

5. Outil électroportatif selon la revendication 1, dans lequel une cavité pour roue est définie entre la première partie et la troisième partie pour recevoir au moins une parmi la première roue (70) et la seconde roue (74).

6. Outil électroportatif selon la revendication 1, dans lequel le couvercle (138) comporte une partie de support de moteur (106) définissant une délimitation supérieure de la cavité (66).

7. Outil électroportatif selon la revendication 1, comprenant en outre une boîte d'engrenages (22) couplée au couvercle (138).

8. Outil électroportatif selon la revendication 1, comprenant en outre un axe de roue motrice (76) couplé à la première roue (70) et un axe de roue menée (83) couplé à la seconde roue (74), le carter de protection (142) comportant en outre une première ouverture (150) destinée à recevoir l'axe de roue motrice (76) et une seconde ouverture (154) destinée à recevoir l'axe de roue menée (83).

9. Outil électroportatif selon la revendication 1, dans lequel une hauteur de la deuxième partie et une hauteur de la troisième partie sont sensiblement égales.

10. Outil électroportatif selon la revendication 1, comprenant en outre un premier pneu (86) couplé à la roue motrice (70) et présentant une première surface configurée pour supporter la lame de scie continue (26), et un second pneu (86) couplé à la roue menée (74) et présentant une seconde surface configurée pour supporter la lame de scie continue (26), la troisième partie étant disposée adjacente à au moins une des première et seconde surfaces et couvrant l'au moins une des première et seconde surfaces.

11. Outil électroportatif selon la revendication 1, dans lequel le couvercle (138) comporte une partie haute et une partie basse opposée à la partie haute, le moteur (18) étant couplé à la partie haute du couvercle (138) et le carter de protection (142) étant couplé à la partie basse du couvercle (138).

12. Outil électroportatif selon la revendication 1, dans lequel le carter de protection (142) peut être retiré du couvercle (138) sans retirer le moteur (18) du couvercle (138).

13. Outil électroportatif selon la revendication 1, comprenant en outre :
une poignée (38) supportée par le boîtier (14) ;
la première roue (70) comportant un premier pneu (86) présentant une première surface configurée pour supporter une lame de scie continue (26),
la seconde roue (74) comportant un second pneu (86) présentant une seconde surface configurée pour supporter la lame de scie continue (26), les premier et second pneus (86) étant configurés pour supporter la lame de scie continue (26) sensiblement dans un plan,
le moteur (18) étant couplé de manière fonctionnelle à la première roue (70) au moyen d'une boîte d'engrenages (22),
le couvercle (138) comprenant en outre une partie haute et une partie basse opposée à la partie haute ; le moteur (18), la boîte d'engrenages (22) et la poignée étant couplés à la partie haute du couvercle (138), et
la première partie du carter de protection (142) s'étendant de manière sensiblement parallèle au plan et étant disposée entre la première roue (70) et la partie basse du couvercle (138), la deuxième partie s'étendant à partir de la première partie transversalement au plan, et la troisième partie s'étendant à partir de la première partie transversalement au plan et étant disposée adjacente à au moins une des première et seconde surfaces et couvrant l'au moins une des première et seconde surfaces.

14. Outil électroportatif selon la revendication 13, dans lequel le carter de protection (142) est couplé à la partie basse du couvercle (138).

15. Outil électroportatif selon la revendication 14, dans lequel le carter de protection (142) peut être retiré du couvercle (138) sans retirer le moteur (18) du couvercle (138).
